(19) Europäisches Patentamt
European Patent Office
Office européen des brevets

(11) **EP 4 773 406 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*H01M 50/533* (2021.01)

(21) Application number: 24857960.9

(52) Cooperative Patent Classification (CPC):
H01M 50/528; H01M 50/533; H01M 50/536;
Y02E 60/10

(22) Date of filing: 18.06.2024

(86) International application number:
PCT/CN2024/099872

(87) International publication number:
WO 2025/044415 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 CN 202311133519

(71) Applicant: BYD Company Limited
Shenzhen, Guangdong 518118 (CN)

(72) Inventors:
• DENG, Dongjun
Shenzhen, Guangdong 518118 (CN)

• WANG, Xinyue
Shenzhen, Guangdong 518118 (CN)
• CHEN, Chong
Shenzhen, Guangdong 518118 (CN)
• DUAN, Pingan
Shenzhen, Guangdong 518118 (CN)
• CHENG, Han
Shenzhen, Guangdong 518118 (CN)

(74) Representative: Mathys & Squire
32 London Bridge Street
The Shard
London SE1 9SG (GB)

(54) **BATTERY CELL, BATTERY APPARATUS, AND ELECTRIC DEVICE**

(57)    A battery cell (100), including a jelly roll (2) that includes a plurality of electrode plates (21). A tab (22) and a cut edge (23) are provided at two ends of each electrode plate (21), respectively; the plurality of electrode plates (21) are classified into first electrode plates (211) and second electrode plates (212) which are arranged in sequence and have opposite polarities; the tabs (22) having opposite polarities are located on different sides of the jelly roll (2); the tabs (22) located on the same side are electrically connected to a first connecting surface (31) of a connector (3); and on the same side of the jelly roll (2), the distance between the first connecting surface (31) and the cut edge (23) is L, the number of electrode plates (21) having the same polarity is n, the number of bending layers of the tabs (22) is m, the thickness of the battery cell (100) is T, and the thickness of each electrode plate (21) is t, satisfying: $0.5 \leq N = (L-5-0.1*T/2)/(n*m*t) \leq 15$.

FIG. 3

**Description**

CROSS-REFERENCE TO RELATED APPLICATIONS

The present disclosure claims priority to Chinese Patent Application No. 2023111335192, filed on August 31, 2023, which is incorporated herein by reference in its entirety.

FIELD

The present disclosure relates to the field of batteries, and more particularly to a battery cell, a battery apparatus, and an electric device.

BACKGROUND

Among all forms of energy, electric energy is the easiest to use, cleanest, most environmentally friendly and the most efficient form of energy. Batteries are the best devices to store electric energy. Batteries are widely used in daily life and have a significant impact on peoples' lives. With the development of battery technology, batteries with high performance are increasingly sought after. In the prior art, the electrode sheet of the battery is usually connected to the inner lead tab and the terminal post through the electrode tab, so that the battery can supply power externally, and the bending state of the electrode tab will directly affect the quality of the battery. If the bending space of the electrode tab of the battery is not properly designed, the overall quality of the battery will be poor, and there is room for improvement.

SUMMARY

The present disclosure is intended to solve at least one of the technical problems in the related art to a certain extent.

An object of the present disclosure is to provide a battery cell that can ensure that the electrode tab remains in a good state after bending, so as to prevent the root portion of the electrode tab from pressing against the slitting edge of the opposite polarity electrode sheet after bending, and improve the safety and reliability of the battery cell.

A battery cell according to an embodiment of the present disclosure includes: a housing assembly; an electrode core arranged in the housing assembly, the electrode core including a plurality of electrode sheets, an electrode tab and a slitting edge being respectively arranged at two ends of each of the electrode sheets, the plurality of electrode sheets being divided into first electrode sheets and second electrode sheets having opposite polarities, the first electrode sheets and the second electrode sheets being arranged in sequence, and electrode tabs of the first electrode sheets and the electrode tabs of the second electrode sheets being located on the different sides of the electrode core; the electrode tabs located on the same side being electrically connected to a first connecting surface of a connector, on the same side of the electrode core, a distance between the first connecting surface and the slitting edge being L, the number of the electrode sheets having the same polarity being n, a number of bending layers of the electrode tab being m, a thickness of the battery cell being T, a thickness of the electrode sheet being t, and the battery cell satisfying the following relationship: $0.5 \leq N=(L-5-0.1*T/2)/(n*m*t) \leq 15$.

The battery cell according to the embodiment of the present disclosure, by limiting the distance between the first connecting surface and the slitting edge on the same side within the above range, can ensure that the electrode tab remains in a good state after bending, so as to prevent the root portion of the electrode tab from pressing against the slitting edge of the opposite polarity electrode sheet after bending, improve the safety and reliability of the battery cell, ensure the space utilization rate of the battery cell, and improve the quality of the battery cell.

According to some embodiments of the present disclosure, a number of the bending layers of the electrode tab is $1 \leq m \leq 3$.

According to some embodiments of the present disclosure, a length H of the battery cell is $400mm \leq H \leq 1500mm$.

According to some embodiments of the present disclosure, a width W of the battery cell is $80mm \leq W \leq 240mm$.

According to some embodiments of the present disclosure, a thickness T of the battery cell is $10mm \leq T \leq 40mm$.

According to some embodiments of the present disclosure, the electrode tabs of the electrode sheets having opposite polarities are located on two sides of the electrode core in a length direction of the electrode core.

According to some embodiments of the present disclosure, the electrode core includes two first surfaces arranged oppositely, and an area of the first surface is larger than an area of the remaining surfaces of the electrode core; the battery cell further includes two insulating films, and the two insulating films are respectively bonded to the two first surfaces.

According to some embodiments of the present disclosure, in a width direction of the electrode core, side edges on a same side of the two insulating films are overlapped and connected to insulate the electrode core from the housing assembly.

According to some embodiments of the present disclosure, in the width direction of the electrode core, the electrode core includes second surfaces arranged oppositely, and the second surface is arranged with an adhesive member having an overlapping region with each of the insulating films.

According to some embodiments of the present disclosure, the width of the electrode core is W, and a thickness of the electrode core is T; in the direction parallel to the width direction of the electrode core, a width of the insulating film is W2, satisfying: W+T≤ W2≤W+2T.

According to some embodiments of the present disclosure, the housing assembly includes a housing body and a cover plate, in the length direction of the electrode core, the cover plates are arranged at two ends of the housing body to define an accommodating cavity for placing the electrode core, and a terminal post is arranged on each cover plate.

The battery cell according to some embodiment of the present disclosure includes: a spacer ring located between an inner side of the cover plate and an end of the electrode core, the spacer ring includes a support portion abutting against the electrode core, and the support portions are arranged on two sides of the electrode tab in the width direction of the electrode core.

According to some embodiments of the present disclosure, in the direction parallel to the width direction of the electrode core, the width of the electrode core is W, and a support width of the support portion is L4, satisfying: L4≤1/3W.

The present disclosure also provides a battery apparatus.

The battery apparatus according to an embodiment of the present disclosure includes: a box; a plurality of battery cells, wherein the battery cells are the battery cells according to any one of the above embodiments, and the plurality of battery cells are arranged in the box.

The battery apparatus according to the embodiment of the present disclosure, by limiting the distance between the first connecting surface and the slitting edge on the same side within the above range, can ensure that the electrode tab remains in a good state after bending, so as to prevent the root portion of the electrode tab from pressing against the slitting edge of the opposite polarity electrode sheet after bending, improve the safety and reliability of the battery cell, ensure the space utilization rate of the battery cell, improve the quality of the battery cell, and improve the reliability of the battery apparatus.

The present disclosure also provides an electric device.

The electric device according to an embodiment of the present disclosure includes the battery apparatus according to any one of the above embodiments.

The electric device according to the embodiment of the present disclosure, by limiting the distance between the first connecting surface and the slitting edge on the same side within the above range, can ensure that the electrode tab remains in a good state after bending, so as to prevent the root portion of the electrode tab from pressing against the slitting edge of the opposite polarity electrode sheet after bending, improve the safety and reliability of the battery cell, ensure the space utilization rate of the battery cell, improve the quality of the battery cell, improve the reliability of the battery apparatus, and improve the overall performance of the electric device.

The additional aspects and advantages of the present disclosure are partially provided in the following descriptions, some of which will become apparent from the following descriptions or may be learned from practices of the present disclosure.

## BRIEF DESCRIPTION OF THE DRAWINGS

FIG. 1 is a schematic structure diagram of a battery cell according to an embodiment of the present disclosure;

FIG. 2 is an installation sectional view of an electrode core according to an embodiment of the present disclosure;

FIG. 3 is an installation sectional view of a connector according to an embodiment of the present disclosure;

FIG. 4 is a sectional view of a battery cell according to an embodiment of the present disclosure;

FIG. 5 is an installation diagram of an insulating film according to an embodiment of the present disclosure.

FIG. 6 is an explosion diagram of a battery cell according to an embodiment of the present disclosure;

FIG. 7 is a test data table of a battery cell according to an embodiment of the present disclosure;

FIG. 8 is a schematic diagram of a battery apparatus according to an embodiment of the present disclosure.

Reference numerals:

battery apparatus 1000,
battery cell 100, box 200,
housing assembly 1, housing body 11, cover plate 12, terminal post 13,
electrode core 2, electrode sheet 21, first electrode sheet 211, second electrode sheet 212, electrode tab 22, slitting edge 23, first surface 24, second surface 25, connector 3, first connecting surface 31, insulating film 4, side edge 41, spacer ring 5, support portion 51.

## DETAILED DESCRIPTION

The embodiments of the present disclosure are described below in detail. Examples of the embodiments are shown in the accompanying drawings, and same or similar reference signs indicate same or similar components or components having same or similar functions. The embodiments described below with reference to the accompanying drawings are exemplary, are intended to explain the present disclosure and cannot be construed as a limitation on the present disclosure.

A battery cell 100 according to an embodiment of the present disclosure will be described with reference to the drawings.

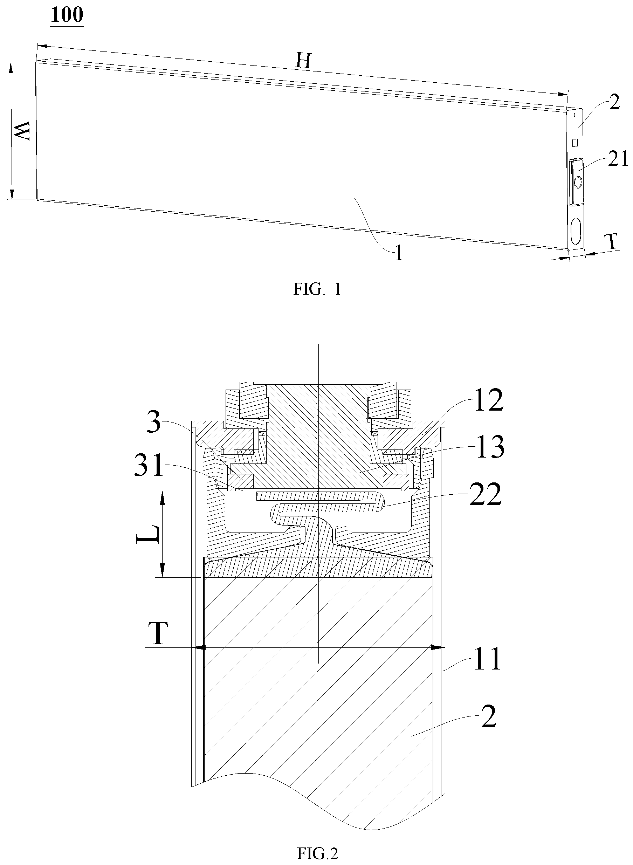

As shown in FIGS. 1 to 8, a battery cell according to an embodiment of the present disclosure includes: a housing assembly 1 and an electrode core 2 arranged in the housing assembly 1, the electrode core 2 includes a plurality of electrode sheets 21, an electrode tab 22 and a slitting edge 23 are respectively arranged at two ends of each of the electrode sheets 21, the plurality of electrode sheets 21 are divided into first electrode sheets 211 and second electrode sheets 212 having opposite polarities, the first electrode sheets 211 and the second electrode sheets 212 are arranged in sequence, and the electrode tabs 22 of the first electrode sheets 211 and the electrode tabs 22 of the second electrode sheets 212 are located on the different sides of the electrode core 2; the electrode tabs 22 located on the same side are electrically connected to a first connecting surface 31 of a connector 3, on the same side of the electrode core 2, the distance between the first connecting surface 31 and the slitting edge 23 is L, the number of the electrode sheets 21 having the same polarity is n, the number of bending layers of the electrode tab 22 is m, the thickness of the battery cell 100 is T, the thickness of the electrode sheet 21 is t, and the battery cell 100 satisfies the following relationship: $0.5 \leq N = (L-5-0.1*T/2)/(n*m*t) \leq 15$.

It is possible to ensure that the electrode tab 22 remains in a good state after bending, so as to prevent the root portion of the electrode tab 22 from pressing against the slitting edge 23 of the opposite polarity electrode sheet 21 after bending, improve the safety and reliability of the battery cell 100, ensure the space utilization rate of the battery cell 100, and improve the quality of the battery cell 100.

For example, referring to FIGS. 1 to 4, the battery cell 100 is arranged with the housing assembly 1 and the electrode core 2, the housing assembly 1 is configured as a square structure and formed with an accommodating cavity, the electrode core 2 is installed in the accommodating cavity of the housing assembly 1, and a terminal post 13 is arranged on the housing assembly 1, and the terminal post 13 may pass through the housing assembly 1 in the thickness direction to extend into the accommodating cavity and be arranged opposite to the electrode core 2. The electrode core 2 includes the plurality of electrode sheets 21, and the trimming edge and the slitting edge 23 are respectively arranged at two ends of each of the electrode sheets 21, and the electrode tabs 22 are connected to the trimming edges. The plurality of electrode sheets 21 are divided into the first electrode sheets 211 and the second electrode sheets 212 having opposite polarities, and for example, the first electrode sheets 211 may be set as the negative electrode sheets and the second electrode sheets 212 may be set as the positive electrode sheets, and the plurality of first electrode sheets 211 and the plurality of second electrode sheets 212 are arranged sequentially and insulated apart from each other, that is, the first electrode sheet 211, the second electrode sheet 212, the first electrode sheet 211, and the second electrode sheet 212 are arranged in the order. The electrode tabs 22 of the first electrode sheets 211 and the electrode tabs 22 of the second electrode sheets 212 are located on different sides of the electrode core 2, so that the electrode tabs 22 of the electrode sheets 21 having opposite polarities are located on different sides, the electrode tabs 22 of the electrode sheets 21 having opposite polarities can be arranged in a staggered manner, thereby avoiding electrical connection between the electrode sheets 21 having opposite polarities.

Meanwhile, the connector 3 may be arranged on the side wall of the housing assembly 1, one side of the connector 3 is electrically connected with the terminal post 13 and the other side is formed with the first connecting surface 31, and the first connecting surface 31 may be fitted with the electrode tab 22 located on one side of the electrode core 2, so that the electrode core 2 can be electrically connected with the terminal post 13 through the electrode tab 22 and the connector 3, and the battery cell 100 can supply power externally through the terminal post 13. The electrode tab 22 is bent so that the electrode tab 22 can contact the first connecting surface 31 in a large area.

On the same side of the electrode core 2, the distance between the first connecting surface 31 and the slitting edge 23 is L, the number of the electrode sheets 21 having the same polarity (as the positive electrode sheets or the negative electrode sheets) is n, the number of the bending layers of the electrode tab 22 is m, the thickness of the battery cell 100 is T, the thickness of the electrode sheet 21 is t, and the battery cell 100 satisfies the following relationship: $0.5 \leq N = (L-5-0.1*T/2)/(n*m*t) \leq 15$.

That is, the distance L between the first connecting surface 31 and the slitting edge 23 on the same side may be greater than or equal to the sum of 0.5 times the reference coefficient, 0.05 times the thickness of the electrode core 2, and 5 mm, and may be less than or equal to the sum of 15 times the reference coefficient, 0.05 times the thickness of the electrode core 2, and 5 mm. Here, the reference coefficient is the product of the sum of the thicknesses of the plurality of electrode sheets 21 having the same polarity and the number of the bending layers of the electrode sheet tab 22. In this way, the distance L between the first connecting surface 31 and the slitting edge 23 on the same side can be limited within a certain range, and it is possible to ensure that the electrode tab 22 remains in a good state after bending, so as to prevent the root portion of the electrode tab 22 from pressing against the slitting edge 23 of the opposite polarity electrode sheet 21 after bending, improve the safety and reliability of the battery cell 100, ensure the space utilization rate of the battery cell 100, and improve the quality of the battery cell 100.

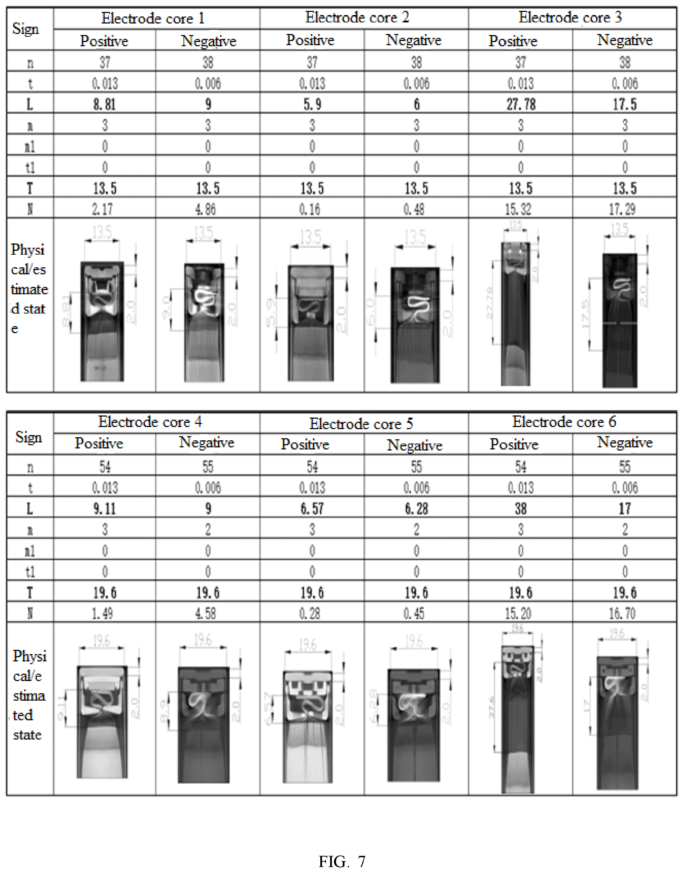

Specifically, in the test data table of the battery cell in FIG. 7, as shown in the test data 1, the number of the positive electrode sheets is 37 and the thickness is 0.013 mm, the number of negative electrode sheets is 38 and the thickness is 0.006 mm, the thickness of the battery cell 100 is 13.5 mm, the number of bending layers of the electrode tab 22 is 3, the distance between the slitting edge 23 of the negative electrode sheet and the first connecting surface 31 on the corresponding side is 8.81 mm, and the distance between the slitting edge 23 of the positive electrode sheet and the first connecting surface 31 on the corresponding side is 9 mm. At this time, the coefficient N corresponding to the positive electrode sheet is 2.17, the coefficient N corresponding to the negative electrode sheet is 4.86, the coefficients satisfy the above specified range, and the bending state of the electrode tab 22 is good.

As shown in the test data 2, the number of the positive electrode sheets is 37 and the thickness is 0.013 mm, the number of negative electrode sheets is 38 and the thickness is 0.006 mm, the thickness of the battery cell 100 is 13.5 mm, the number of bending layers of the electrode tab 22 is 3, the distance between the slitting edge 23 of the negative electrode sheet and the first connecting surface 31 on the corresponding side is 5.9 mm, and the distance between the slitting edge 23 of the positive electrode sheet and the first connecting surface 31 on the corresponding side is 6 mm. At this time, the coefficient N corresponding to the positive electrode sheet is 0.16, the coefficient N corresponding to the negative electrode sheet is 0.47, the coefficient is less than the above specified range, the slitting edge 23 is too close to the connector 3, and the electrode tab 22 is excessively compressed by the connector 3, which easily causes a short circuit.

As shown in the test data 3, the number of the positive electrode sheets is 37 and the thickness is 0.013 mm, the number of negative electrode sheets is 38 and the thickness is 0.006 mm, the thickness of the battery cell 100 is 13.5 mm, the number of bending layers of the electrode tab 22 is 3, the distance between the slitting edge 23 of the negative electrode sheet and the first connecting surface 31 on the corresponding side is 27.78 mm, and the distance between the slitting edge 23 of the positive electrode sheet and the first connecting surface 31 on the corresponding side is 17.5 mm. At this time, the coefficient N corresponding to the positive electrode sheet is 15.32, the coefficient N corresponding to the negative electrode sheet is 17.29, the coefficient is greater than the above specified range, the slitting edge 23 is too far away from the connector 3, and the space utilization is low.

As shown in the test data 4, the number of the positive electrode sheets is 54 and the thickness is 0.013 mm, the number of negative electrode sheets is 55 and the thickness is 0.006 mm, the thickness of the battery cell 100 is 19.6 mm, the number of bending layers of the electrode tab 22 is 3, the distance between the slitting edge 23 of the negative electrode sheet and the first connecting surface 31 on the corresponding side is 9.11 mm, and the distance between the slitting edge 23 of the positive electrode sheet and the first connecting surface 31 on the corresponding side is 9 mm. At this time, the coefficient N corresponding to the positive electrode sheet is 1.49, the coefficient N corresponding to the negative electrode sheet is 4.58, the coefficients satisfy the above specified range, and the bending state of the electrode tab 22 is good.

As shown in the test data 5, the number of the positive electrode sheets is 54 and the thickness is 0.013 mm, the number of negative electrode sheets is 55 and the thickness is 0.006 mm, the thickness of the battery cell 100 is 19.6 mm, the number of bending layers of the electrode tab 22 is 3, the distance between the slitting edge 23 of the negative electrode sheet and the first connecting surface 31 on the corresponding side is 6.57 mm, and the distance between the slitting edge 23 of the positive electrode sheet and the first connecting surface 31 on the corresponding side is 6.28 mm. At this time, the coefficient N corresponding to the positive electrode sheet is 0.28, the coefficient N corresponding to the negative electrode sheet is 0.45, the coefficient is less than the above specified range, the slitting edge 23 is too close to the connector 3, and the electrode tab 22 is excessively compressed by the connector 3, which easily causes a short circuit.

As shown in the test data 6, the number of the positive electrode sheets is 54 and the thickness is 0.013 mm, the number of negative electrode sheets is 55 and the thickness is 0.006 mm, the thickness of the battery cell 100 is 19.6 mm, the number of bending layers of the electrode tab 22 is 3, the distance between the slitting edge 23 of the negative electrode sheet and the first connecting surface 31 on the corresponding side is 38 mm, and the distance between the slitting edge 23 of the positive electrode sheet and the first connecting surface 31 on the corresponding side is 17.5 mm. At this time, the coefficient N corresponding to the positive electrode sheet is 15.2, the coefficient N corresponding to the negative electrode sheet is 16.7, the coefficient is greater than the above specified range, the slitting edge 23 is too far away from the connector 3, and the space utilization is low.

The battery cell 100 according to the embodiment of the present disclosure, by limiting the distance between the first connecting surface 31 and the slitting edge 23 of the electrode sheet 21 on the same side within the above range, can ensure that the electrode tab 22 remains in a good state after bending, so as to prevent the root portion of the electrode tab 22 from pressing against the slitting edge 23 of the opposite polarity electrode sheet 21 after bending, improve the safety and reliability of the battery cell 100, ensure the space utilization rate of the battery cell 100, and improve the quality of the battery cell 100.

In some embodiments of the present disclosure, the number of bending layers of the electrode tab

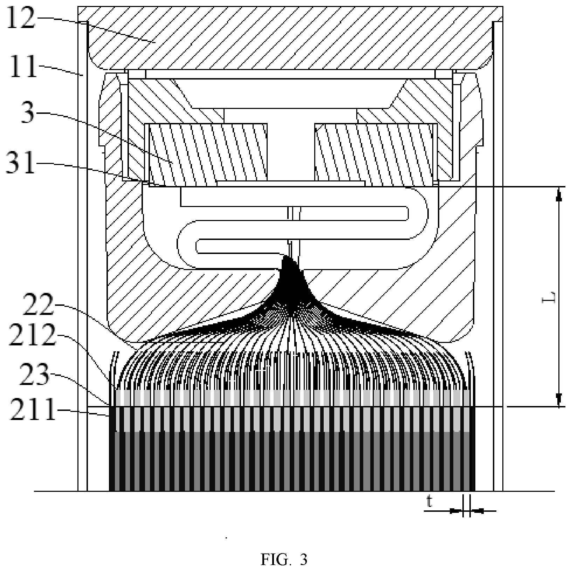

22 is 1≤m≤3. For example, referring to FIGS. 2 and 3, the number of bending layers of the electrode tab 22 may be 1; or, the number of bending layers of the electrode tab 22 may be 2; or, the number of bending layers of the electrode tab 22 may be 3, and the present disclosure is not limited thereto. Through the above arrangement, it is possible to avoid excessive stress of the connector 3 caused by the excessive number of layers of the connector 3, reduce the influence of the connector 3 on the slitting edge 23 of the electrode sheet 21 having opposite polarities, and improve the reliability of the battery cell 100.

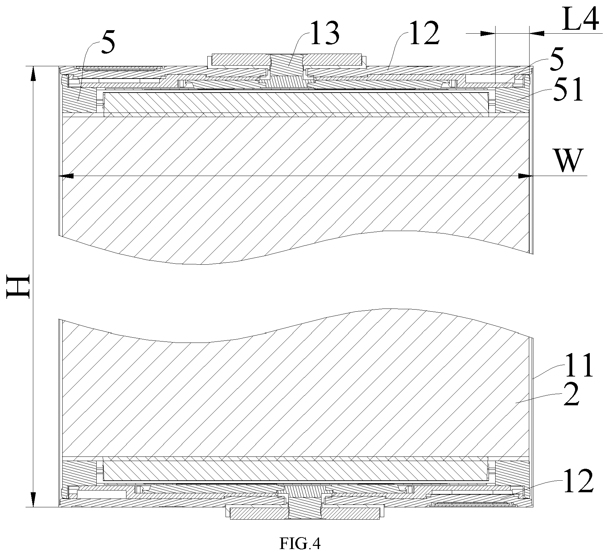

In some embodiments of the present disclosure, the length H of the battery cell 100 is 400mm≤H≤1500mm. For example, referring to FIG. 4, the length of the battery cell 100 is H. The length H of the battery cell 100 may be 600 mm; or, the length H of the battery cell 100 may be 950 mm; or, the length H of the battery cell 100 may be 1300 mm; or, the length H of the battery cell 100 may be an arbitrary value satisfying the condition, and the present disclosure is not limited thereto.

Through the above arrangement, it is possible to avoid the length of the battery cell 100 being too large, improve the structural stability of the battery cell 100, and avoid the length of battery cell 100 being too small, which is beneficial to improving the energy density of the battery cell 100 and improving the practicality of the battery cell 100.

In some embodiments of the present disclosure, the width W of the battery cell 100 is 80mm≤W≤240mm. For example, referring to FIG. 4, the width W of the battery cell 100 may be 100 mm; or, the width W of the battery cell 100 may be 160 mm; or, the width W of the battery cell 100 may be 220 mm; or, the width W of the battery cell 100 may be an arbitrary value satisfying the condition, and the present disclosure is not limited thereto. Through the above arrangement, it is possible to avoid the width of the battery cell 100 being too large, improve the structural stability of the battery cell 100, and avoid the width of the battery cell 100 being too small, which is beneficial to improving the energy density of the battery cell 100.

In some embodiments of the present disclosure, the thickness T of the battery cell 100 is 10mm≤T≤40mm. For example, referring to FIG. 2, the thickness T of the battery cell 100 may be 15 mm; or, the thickness T of the battery cell 100 may be 25 mm; or, the thickness T of the battery cell 100 may be 35 mm; or, the thickness T of the battery cell 100 may be an arbitrary value satisfying the condition, and the present disclosure is not limited thereto. Through the above arrangement, it is possible to avoid excessive thickness of the battery cell 100 affecting the heat dissipation performance of the battery cell 100, and avoid the insufficient thickness of the battery cell 100 affecting the improvement of the structural stability of the battery cell 100, thereby improving the practicality of the battery cell 100.

In some embodiments of the present disclosure, the electrode tabs 22 of the electrode sheets 21 having opposite polarities are located on two sides of the electrode core 2 in the length direction of the electrode core 2. For example, referring to FIG. 4, the two ends of the electrode sheet 21 in the length direction of the electrode core 2 may be respectively set as a first end and a second end, and the terminal posts 13 may be respectively arranged at two ends of the housing assembly 1 in the length direction, the electrode tab 22 of the positive electrode sheet and the slitting edge 23 of the negative electrode sheet are arranged at one end of the electrode core 2 in the length direction, and the electrode tab 22 of the positive electrode sheet may be electrically connected to the terminal post 13 at the corresponding end, the electrode tab 22 of the negative electrode sheet and the slitting edge 23 of the positive electrode sheet are arranged at the other end of the electrode core 2 in the length direction, and the electrode tab 22 of the negative electrode sheet can be electrically connected to the terminal post 13 at the corresponding end. Through the above arrangement, the probability of short circuiting of the battery cell 100 can be reduced, and the reliability and practicability of the battery cell 100 can be improved.

In some embodiments of the present disclosure, the electrode core 2 includes two first surfaces 24 arranged oppositely, and the area of the first surfaces 24 is larger than the area of the remaining surfaces of the electrode core 2. The battery cell 100 further includes two insulating films 4, and the two insulating films 4 are bonded to the two first surfaces 24, respectively.

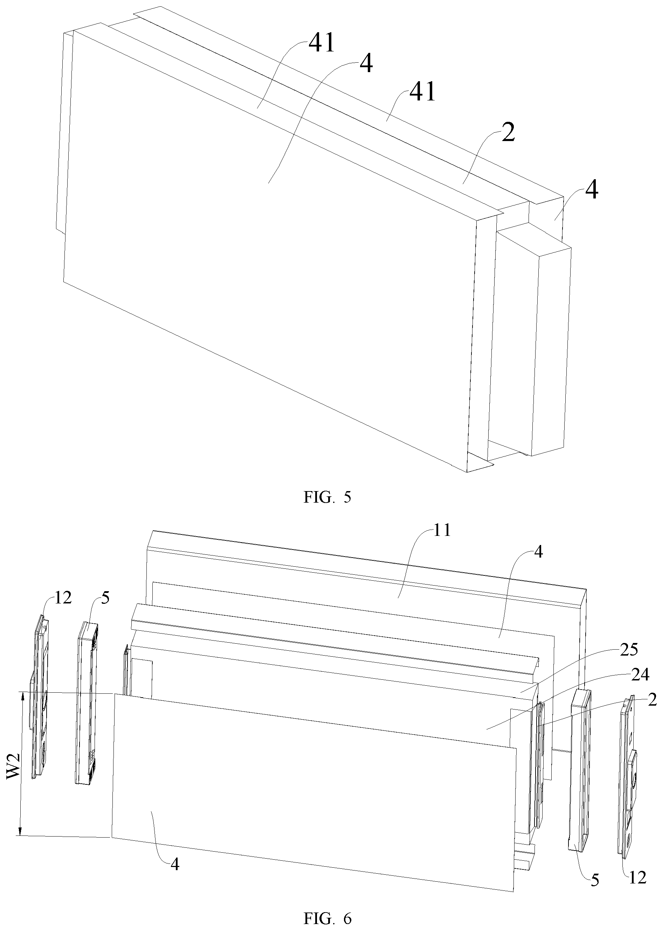

For example, referring to FIGS. 5 and 6, the opposite side surfaces of the electrode core 2 in the thickness direction may be set as the first surfaces 24, and the area of the first surfaces 24 is larger than the area of the remaining surface of the electrode core 2. The battery cell 100 may have two insulating films 4, the insulating films 4 are chosen as thermal composite films, the two insulating films 4 are respectively bonded to the two first surfaces 24, and the ends of the two insulating films 4 in the width direction can be connected by insulating members (such as insulating connection films), so that the insulating films 4 can insulate the electrode core 2 from the housing assembly 1 around the circumferential direction of the electrode core 2. Meanwhile, the insulating films 4 can be configured to bond to the inner peripheral wall of the housing assembly 1, so that the electrode core 2 can be bonded inside the housing assembly 1 by the insulating films 4.

It will be understood that by bonding the insulating films 4 to the first surfaces 24, the installation stability of the insulating films 4 can be improved, and the connecting area between the housing assembly 1 and the electrode core 2 can be increased, and the installation stability of the battery cell 100 is improved.

In some embodiments of the present disclosure, in the width direction of the electrode core 2, the side edges 41 of the two insulating films 4 on the same side are overlapped and connected to insulate the electrode core 2 from the housing assembly 1.

For example, referring to FIGS. 5 and 6, the width of the insulating film 4 may be greater than the width of the electrode core 2, so that the two ends of the insulating film 4 in the width direction can extend to the two side surfaces of the electrode core 2 in the width direction, respectively, and the side edges 41 of the two insulating films 4 extending to the same side surface of the electrode core 2 in the width direction can be overlapped and connected, so that the two insulating films 4 can be surrounded and fixed to the outer side of the electrode core 2 in the circumferential direction to insulate the electrode core 2 from the housing assembly 1. As a result, it is beneficial for reducing the number of parts of the battery cell 100, reducing the processing cost, improving the insulation performance of the battery cell 100, and improving the reliability of the battery cell 100.

In some embodiments of the present disclosure, in the width direction of the electrode core 2, the electrode core 2 includes second surfaces 25 arranged oppositely, an adhesive member is arranged on the second surface 25, and the adhesive member has an overlapping region with each insulating film 4.

For example, referring to FIGS. 5 and 6, the side surfaces of the electrode core 2 in the width direction may be set as the second surfaces 25, the two second surfaces 25 are arranged oppositely, the side edges 41 of the insulating films 4 bonded to the first surfaces 24 may extend to the positions directly opposite the second surfaces 25, at least portions of the side edges 41 of the two insulating films 4 extending to the second surface 25 do not overlap, the adhesive member is arranged on the second surface 25, the adhesive member has an overlapping region with each insulating film 4, and the adhesive member may be adhesively connected to the side edges 41 of the two insulating films 4 respectively to fix the side edges 41 of the two insulating films 4 to the second surface 25, respectively. As a result, it is beneficial for improving the insulation performance of the insulating film 4, and improving the reliability of the battery cell 100.

In some embodiments of the present disclosure, the width of the electrode core 2 is W, and the thickness of the electrode core 2 is T; in the direction parallel to the width direction of the electrode core 2, the width of the insulating film 4 is W2, which satisfies: $W+T \leq W2 \leq W+2T$.

For example, referring to FIGS. 5 and 6, the width of the electrode core 2 may be W, and the thickness of the electrode core 2 may be T. In the direction parallel to the width direction of the electrode core 2, the width of the insulating film 4 may be W2, which satisfies: $W+T \leq W2 \leq W+2T$. That is, the width W2 of the insulating film 4 may be greater than or equal to the sum of the thickness T of the electrode core 2 and the width W of the electrode core 2, and when the insulating film 4 is bonded to the first surface 24 of the electrode core 2, the side edges 41 of the insulating film 4 may extend to the side surfaces of the electrode core 2 in the width direction, and the size of the side edge 41 of the insulating film 4 extending to the side surface of the electrode core 2 in the width direction is greater than or equal to 1/2T, so that the side edges 41 of the two insulating films 4 extending to the same side of the electrode core 2 in the width direction are in contact or have overlapping portions, and the side edges 41 of the two insulating films 4 can be overlapped and connected.

Meanwhile, the width W2 of the insulating film 4 may be less than or equal to the sum of the thickness T of the electrode core 2 and twice the width W of the electrode core 2, so that the size of the side edge 41 of the insulating film 4 extending to the side surface of the electrode core 2 in the width direction is less than or equal to T, and the side edge 41 of the insulating film 4 can be avoided extending onto the other first surface 24, which is beneficial for reducing the installation difficulty of the insulating film 4. Accordingly, it is beneficial for reducing the installation difficulty of the battery cell 100, and improving the practicality of the battery cell 100.

In some embodiments of the present disclosure, the housing assembly 1 includes a housing body 11 and a cover plate 12, in the length direction of the electrode core 2, the cover plates 12 are arranged at two ends of the housing body 11 to define the accommodating cavity for placing the electrode core 2, and a terminal post 13 is arranged on each cover plate 12.

For example, referring to FIG. 6, the housing assembly 1 includes the housing body 11 and the cover plate 12, the housing body 11 is configured as a square cylindrical shape, the two ends of the housing body 11 in the length direction are respectively formed with openings, two cover plates 12 are arranged, and the two cover plates 12 are configured to be installed on the two openings of the housing body 11 respectively to close the openings, so that the housing body 11 and the cover plates 12 define a sealed accommodating cavity, the electrode core 2 is installed in the accommodating cavity, and the terminal post 13 is arranged on each cover plate 12. The terminal post 13 passes through the cover plate 12 in the thickness direction, and the terminal post 13 is configured to be electrically connected with the electrode tabs 22 of the electrode sheets 21 having the same polarity, so that the electrode core 2 can supply power externally. Through the above arrangement, it is beneficial for reducing the processing difficulty of the battery cell 100, and improving the reliability of the battery cell 100.

In some embodiments of the present disclosure, referring to FIG. 6, the battery cell 100 according to the embodiment of the present disclosure further includes a spacer ring 5 located between the inner side of the cover plate 12 and the end of the electrode core 2, the spacer ring 5 includes a support portion 51 abutting against the electrode core 2, and the support portions 51 are arranged on two sides of the electrode tab 22 in the width direction of the electrode core 2.

For example, referring to FIG. 6, the battery cell 100 has the spacer ring 5, the material of the spacer ring 5 is an elastic insulating material such as rubber, the spacer ring 5 is designed conformally with the opening of the housing body 11, and the spacer ring 5 is configured to be installed between the inner side of the cover plate 12 (that is, the side facing the accommodating cavity) and the end of the electrode core 2, so that the spacer ring 5 can insulate the cover plate 12 and the electrode core 2 to avoid short circuit of the battery cell 100. Meanwhile, the support portion 51 configured as a bump structure may be formed on the side of the spacer ring 5 facing the electrode core 2, and the support portions 51 of the spacer ring 5 may be arranged at two ends of the electrode core 2 in the width direction, respectively, and the two support portions 51 are located on the two sides of the electrode tab 22 and are supported on the end face of the electrode core 2. As a result, the support portion 51 can avoid the electrode tab 22 and effectively limit the electrode core 2, and the installation stability of the electrode core 2 is improved.

In some embodiments of the present disclosure, in the direction parallel to the width direction of the electrode core 2, the width of the electrode core 2 is W, and the support width of the support portion 51 is L4, which satisfies: L4≤1/3W.

For example, referring to FIG. 4, the width of the electrode core 2 is W, in the direction parallel to the width direction of the electrode core 2, and the support width of the support portion 51 is L4, which satisfies: L4≤1/3W. That is, the width of the support portion 51 may be less than or equal to one third of the width of the electrode core 2, the sum of the widths of the two support portions 51 may be less than or equal to two thirds of the width of the electrode core 2, the two support portions 51 are spaced apart and define a clearance space for clearing the electrode tabs 22 of the electrode core 2, and the width of the clearance space is greater than or equal to one third of the width of the electrode core 2. As a result, the sufficient space can be reserved for the arrangement of the electrode tabs 22, the installation difficulty of the tabs 22 is reduced, and the reliability of the battery cell 100 is improved.

The present disclosure also provides a battery apparatus 1000.

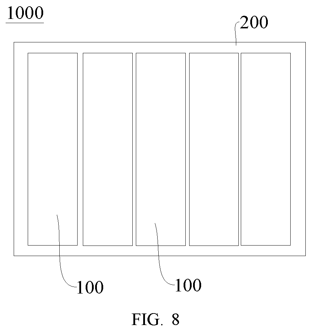

Referring to FIG. 8, the battery apparatus 1000 according to the embodiment of the present disclosure includes: a box 200; a plurality of battery cells 100, wherein the battery cells 100 are the battery cells 100 according to any one of the above embodiments, and the plurality of battery cells 100 are arranged in the box 200.

For example, the battery apparatus 1000 may include the box 200 and the plurality of battery cells 100, the box 200 may be configured as a square structure, the installation cavity is formed in the box 200, the plurality of battery cells 100 are all installed in the installation cavity, the plurality of battery cells 100 may be arranged sequentially or spaced apart, and the plurality of battery cells 100 are configured for synchronous charging and discharging, so that the battery module can work stably.

The battery apparatus 1000 according to the embodiment of the present disclosure, by limiting the distance between the first connecting surface 31 and the slitting edge 23 on the same side within the above range, can ensure that the electrode tab 22 remains in a good state after bending, so as to avoid the root portion of the electrode tab 22 from pressing against the slitting edge 23 of the opposite polarity electrode sheet 21 after bending, improve the safety and reliability of the battery cell 100, ensure the space utilization rate of the battery cell 100, improve the quality of the battery cell 100, and improve the reliability of the battery apparatus 1000.

The present disclosure also provides an electric device.

The electric device according to the embodiment of the present disclosure includes the battery apparatus 1000 according to any one of the above embodiments.

The electric device according to the embodiment of the present disclosure, by limiting the distance between the first connecting surface 31 and the slitting edge 23 on the same side within the above range, can ensure that the electrode tab 22 remains in a good state after bending, so as to avoid the root portion of the electrode tab 22 from pressing against the slitting edge 23 of the opposite polarity electrode sheet 21 after bending, improve the safety and reliability of the battery cell 100, ensure the space utilization rate of the battery cell 100, improve the quality of the battery cell 100, improve the reliability of the battery apparatus 1000, and improve the overall performance of the electric device.

In the description of the present disclosure, it will be understood that the orientation or positional relationships indicated by the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the drawings. It is intended only to facilitate and simplify the description of the present disclosure, and is not intended to indicate or imply that a referred device or element must have a specific orientation, be constructed, and operate in a specific orientation, and therefore should not be construed as a limitation of the present disclosure.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present disclosure, unless explicitly specified, "multiple" means two or more.

In the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements. A person of ordinary skill in the art can understand specific meanings of the terms in the present disclosure based on specific situations.

In the present disclosure, unless otherwise explicitly specified and limited, the first feature "above" or "below" the second feature may be in direct contact between the first and second features, or indirect contact between the first and second features through an intermediate medium. Furthermore, the first feature being "above" the second feature may be the first feature being directly above or obliquely above the second feature, or merely mean that the first feature is horizontally higher than the second feature. The first feature being "below" the second feature may mean that the first feature is directly below or obliquely below the second feature, or merely mean that the first feature is horizontally lower than the second feature.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. Furthermore, a person skilled in the art can combine different embodiments or examples described in this specification and features of different embodiments or examples without contradicting each other.

Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A battery cell (100) comprising:

   a housing assembly (1);

   an electrode core (2) arranged in the housing assembly (1), the electrode core (2) comprising a plurality of electrode sheets (21), an electrode tab (22) and a slitting edge (23) being respectively arranged at two ends of each of the electrode sheets (21), the plurality of electrode sheets (21) being divided into first electrode sheets (211) and second electrode sheets (212) having opposite polarities, the first electrode sheets (211) and the second electrode sheets (212) being arranged in sequence, and electrode tabs (22) of the first electrode sheets (211) and the electrode tabs (22) of the second electrode sheets (212) being located on the different sides of the electrode core (2);

   the electrode tabs (22) located on the same side being electrically connected to a first connecting surface (31) of a connector (3), on the same side of the electrode core (2), a distance between the first connecting surface (31) and the slitting edge (23) being L, a number of the electrode sheets (21) having the same polarity being n, a number of bending layers of the electrode tab (22) being m, a thickness of the battery cell (100) being T, a thickness of the electrode sheet (21) being t, and the battery cell (100) satisfying the following relationship:

$$0.5 \leqslant N = (L - 5 - 0.1 * T/2)/(n * m * t) \leqslant 15.$$

2. The battery cell (100) according to claim 1, wherein the number of the bending layers of the electrode tab (22) is $1 \leq m \leq 3$.

3. The battery cell (100) according to any one of claims 1 and 2, wherein a length H of the battery cell (100) is $400mm \leq H \leq 1500mm$.

4. The battery cell (100) according to claim 3, wherein a width W of the battery cell (100) is $80mm \leq W \leq 240mm$.

5. The battery cell (100) according to claim 4, wherein the thickness T of the battery cell (100) is $10mm \leq T \leq 40mm$.

6. The battery cell (100) according to any one of claims 1 to 5, wherein the electrode tabs (22) of the electrode sheets (21) having opposite polarities are located on two sides of the electrode core (2) in a length direction of the electrode core (2).

7. The battery cell (100) according to claim 6, wherein the electrode core (2) comprises two first surfaces (24) arranged oppositely, and an area of the first surface (24) is larger than an area of the remaining surfaces of the electrode core (2);

the battery cell (100) further comprises two insulating films (4), and the two insulating films (4) are respectively bonded to the two first surfaces (24).

8. The battery cell (100) according to claim 7, wherein in a width direction of the electrode core (2), side edges (41) on a same side of the two insulating films (4) are overlapped and connected to insulate the electrode core (2) from the housing assembly (1).

9. The battery cell (100) according to any one of claims 7 and 8, wherein in the width direction of the electrode core (2), the electrode core (2) comprises second surfaces (25) arranged oppositely, and the second surface (25) is arranged with an adhesive member having an overlapping region with each of the insulating films (4).

10. The battery cell (100) according to claim 8, wherein the width of the electrode core (2) is W, and a thickness of the electrode core (2) is T; in the direction parallel to the width direction of the electrode core (2), a width of the insulating film (4) is W2, satisfying: $W+T \leq W2 \leq W+2T$.

11. The battery cell (100) according to any one of claims 7 to 10, wherein the housing assembly (1) comprises a housing body (11) and a cover plate (12), in the length direction of the electrode core (2), the cover plates (12) are arranged at two ends of the housing body (11) to define an accommodating cavity for placing the electrode core (2), and a terminal post (13) is arranged on each cover plate (12).

12. The battery cell (100) according to claim 11, further comprising: a spacer ring (5) located between an inner side of the cover plate (12) and an end of the electrode core (2), the spacer ring (5) comprising a support portion (51) abutting against the electrode core (2), and the support portions (51) are arranged on two sides of the electrode tab (22) in the width direction of the electrode core (2).

13. The battery cell (100) according to claim 12, wherein, in the direction parallel to the width direction of the electrode core (2), the width of the electrode core (2) is W, and a support width of the support portion (51) is L4, satisfying: $L4 \leq 1/3W$.

14. A battery apparatus (1000), comprising:

   a box (200);
   a plurality of battery cells (100), the battery cells (100) being the battery cells (100) according to any one of claims 1 to 13, the plurality of battery cells (100) being arranged in the box (200).

15. An electric device comprising a battery apparatus (1000) according to claim 14.

**100**

FIG. 1

FIG.2

FIG. 3

FIG.4

FIG. 5

FIG. 6

| Sign | Electrode core 1 | | Electrode core 2 | | Electrode core 3 | |
|---|---|---|---|---|---|---|
| | Positive | Negative | Positive | Negative | Positive | Negative |
| n | 37 | 38 | 37 | 38 | 37 | 38 |
| t | 0.013 | 0.006 | 0.013 | 0.006 | 0.013 | 0.006 |
| L | 8.81 | 9 | 5.9 | 6 | 27.78 | 17.5 |
| n | 3 | 3 | 3 | 3 | 3 | 3 |
| n1 | 0 | 0 | 0 | 0 | 0 | 0 |
| t1 | 0 | 0 | 0 | 0 | 0 | 0 |
| T | 13.5 | 13.5 | 13.5 | 13.5 | 13.5 | 13.5 |
| N | 2.17 | 4.86 | 0.16 | 0.48 | 15.32 | 17.29 |
| Physical/estimated state | | | | | | |

| Sign | Electrode core 4 | | Electrode core 5 | | Electrode core 6 | |
|---|---|---|---|---|---|---|
| | Positive | Negative | Positive | Negative | Positive | Negative |
| n | 54 | 55 | 54 | 55 | 54 | 55 |
| t | 0.013 | 0.006 | 0.013 | 0.006 | 0.013 | 0.006 |
| L | 9.11 | 9 | 6.57 | 6.28 | 38 | 17 |
| n | 3 | 2 | 3 | 2 | 3 | 2 |
| n1 | 0 | 0 | 0 | 0 | 0 | 0 |
| t1 | 0 | 0 | 0 | 0 | 0 | 0 |
| T | 19.6 | 19.6 | 19.6 | 19.6 | 19.6 | 19.6 |
| N | 1.49 | 4.58 | 0.28 | 0.45 | 15.20 | 16.70 |
| Physical/estimated state | | | | | | |

FIG. 7

1000

200

100                    100

FIG. 8

## INTERNATIONAL SEARCH REPORT

International application No.

**PCT/CN2024/099872**

| A. | CLASSIFICATION OF SUBJECT MATTER |
|---|---|
| | H01M 50/533(2021.01)i |

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, ENTXTC, DWPI, 中国期刊网全文数据库, China Journal Network Full-text Database (CJFD): 电池, 极芯, 极片, 极耳, 极柱, 折弯, 挤压, electric 3d core, battery, negative 3d plate?, positive 3d plate?, tab, pole, bend+, extrusion

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 216055078 U (BYD CO., LTD. et al.) 15 March 2022 (2022-03-15) description, paragraphs 40-64, and figures 1-8 | 1-15 |
| X | CN 114597605 A (BYD CO., LTD.) 07 June 2022 (2022-06-07) claims 1-11, and description, figures 1-10 | 1-15 |
| A | CN 101877413 A (BYD CO., LTD.) 03 November 2010 (2010-11-03) entire document | 1-15 |
| A | CN 114204220 A (BYD CO., LTD.) 18 March 2022 (2022-03-18) entire document | 1-15 |
| A | CN 211350812 U (HUIZHOU BYD BATTERY CO., LTD.) 25 August 2020 (2020-08-25) entire document | 1-15 |
| A | KR 20180072065 A (LG CHEMICAL LTD.) 29 June 2018 (2018-06-29) entire document | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 August 2024** | **04 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2024/099872** |

| Patent document cited in search report | | | Publication date (day/month/year) | Patent family member(s) | | | Publication date (day/month/year) |
|---|---|---|---|---|---|---|---|
| CN | 216055078 | U | 15 March 2022 | None | | | |
| CN | 114597605 | A | 07 June 2022 | WO | 2022116469 | A1 | 09 June 2022 |
| | | | | CN | 114597605 | B | 14 November 2023 |
| CN | 101877413 | A | 03 November 2010 | EP | 2425471 | A1 | 07 March 2012 |
| | | | | EP | 2425471 | A4 | 02 January 2013 |
| | | | | EP | 2425471 | B1 | 15 April 2015 |
| | | | | KR | 20120013418 | A | 14 February 2012 |
| | | | | KR | 101285710 | B1 | 12 July 2013 |
| | | | | WO | 2010124562 | A1 | 04 November 2010 |
| | | | | US | 2012094161 | A1 | 19 April 2012 |
| | | | | JP | 2012525665 | A | 22 October 2012 |
| | | | | JP | 5564104 | B2 | 30 July 2014 |
| | | | | CN | 101877413 | B | 30 October 2013 |
| CN | 114204220 | A | 18 March 2022 | EP | 3961798 | A1 | 02 March 2022 |
| | | | | CA | 3191039 | A1 | 03 March 2022 |
| | | | | WO | 2022042493 | A1 | 03 March 2022 |
| | | | | CN | 114204220 | B | 07 April 2023 |
| | | | | KR | 20230051239 | A | 17 April 2023 |
| | | | | IN | 202327017493 | A | 21 April 2023 |
| | | | | US | 2023231287 | A1 | 20 July 2023 |
| | | | | IN | 531378 | B | 05 April 2024 |
| | | | | JP | 2023539658 | A | 15 September 2023 |
| CN | 211350812 | U | 25 August 2020 | None | | | |
| KR | 20180072065 | A | 29 June 2018 | KR | 102234993 | B1 | 01 April 2021 |

Form PCT/ISA/210 (patent family annex) (July 2022)

**EP 4 773 406 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023111335192